# FASCICULE DE BREVET EUROPEEN

(11) **EP 2 439 155 B1**
(45) Date de publication et mention de la délivrance du brevet: **01.01.2014**
(21) Numéro de dépôt: 11181012.3
(22) Date de dépôt: 13.09.2011
(51) Int. Cl.: B65G 65/00, B65D 83/00

(54) **Plateau de transport et installation de fabrication de produits alimentaires comportant de tels plateaux**
Transportplatte und Anlage zur Erstellung von Lebensmitteln mit solchen Transportplatten
Tray and plant for manufacturing food products comprising such trays

(30) Priorité: 06.10.2010 FR 1058108; 26.10.2010 FR 1058772
(43) Date de publication de la demande: 11.04.2012
(73) Titulaire: Armor Inox, 56430 Mauron (FR)
(72) Inventeur: Cadoret, Bernard, 56430 MAURON (FR); Dreano, Jean-Luc, 56430 MAURON (FR)
(74) Mandataire: Maillet, Alain

(56) Documents cités:
- EP-A1- 0 391 575
- US-B1- 6 762 382

## Description

La présente invention concerne un plateau de transport pour des produits alimentaires, ainsi qu'une installation de fabrication de produits alimentaires comportant au moins un tel plateau de transport.

Dans une installation du type installation de production de jambons, les produits subissent différentes opérations comme par exemple la mise en forme, la cuisson, la découpe etc. Entre ces différentes opérations, les produits sont transportés à l'aide de plateaux de transport, chacun prenant la forme d'un réceptacle avec un fond sur lequel les produits sont posés et des bords qui courent autour du fond pour éviter aux produits de tomber.

Le document US-B-6,762,382 présente un plateau de transport tel le préambule de la revendication 1.

Les plateaux sont généralement empilés les uns sur les autres, et le déchargement des produits alimentaires est effectué manuellement par un opérateur.

Comme ces produits sont généralement lourds, le travail de l'opérateur est pénible.

Un objet de la présente invention est de proposer un plateau de transport qui ne présente pas les inconvénients de l'art antérieur et qui en particulier facilite le travail de déchargement.

A cet effet, est proposé un plateau de transport destiné à être utilisé dans une installation de fabrication de produits alimentaires, ladite installation de fabrication comportant des actionneurs, le plateau de transport comportant:
- un châssis,
- un fond autour duquel s'étend ledit châssis, ledit fond étant constitué de deux panneaux montés sur le châssis, chacun présentant un premier bord parallèle et en vis-à-vis du premier bord de l'autre panneau, chaque panneau étant mobile en rotation autour d'un axe de rotation parallèle auxdits premiers bords entre une position de transport dans laquelle la distance entre les premiers bords est inférieure au diamètre des produits alimentaires et une position de déchargement dans laquelle au moins l'un des premiers bords est abaissé pour que la distance entre les premiers bords soit supérieure au diamètre des produits alimentaires, chaque panneau étant destiné à coopérer avec un actionneur destiné à le faire passer de la position de transport à la position de déchargement, le centre de gravité de chaque panneau étant disposé de l'autre côté dudit axe de rotation par rapport au premier bord dudit panneau et
- des moyens de limitation destinés à empêcher un relèvement du premier bord de chaque panneau au-delà de la position de transport.

Avantageusement, les moyens de limitation sont constitués d'une butée que présente chaque panneau et, pour chaque butée, d'un appui que présente le châssis et sur lequel ladite butée vient en appui en position de transport.

Avantageusement, pour chaque panneau, la butée est disposée le long d'un deuxième bord dudit panneau qui s'étend parallèlement au premier bord.

L'invention propose également une installation de fabrication de produits alimentaires comportant:
- un système d'entraînement,
- un moyen d'évacuation,
- au moins un plateau de transport selon l'une des variantes précédentes dont le châssis est déplacé par ledit système d'entraînement, et
- pour chaque panneau, au moins un actionneur destiné à faire pivoter ledit panneau de sa position de transport à sa position de déchargement au-dessus du moyen d'évacuation.

Avantageusement, le moyen d'évacuation est constitué d'un transporteur, du type transporteur à bandes.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente une vue partielle d'une installation de fabrication de produits alimentaires selon l'invention,
la Fig. 2 est une vue selon la flèche II de la Fig. 1, d'un plateau de transport selon l'invention dans une position de déchargement,
la Fig. 3 montre le plateau de transport en position de transport,
la Fig. 4 montre le plateau de transport dans une première position de déchargement,
la Fig. 5 montre le plateau de transport dans une deuxième position de déchargement, et
la Fig. 6 est une coupe du plateau de transport de la Fig. 4 selon le plan VI.

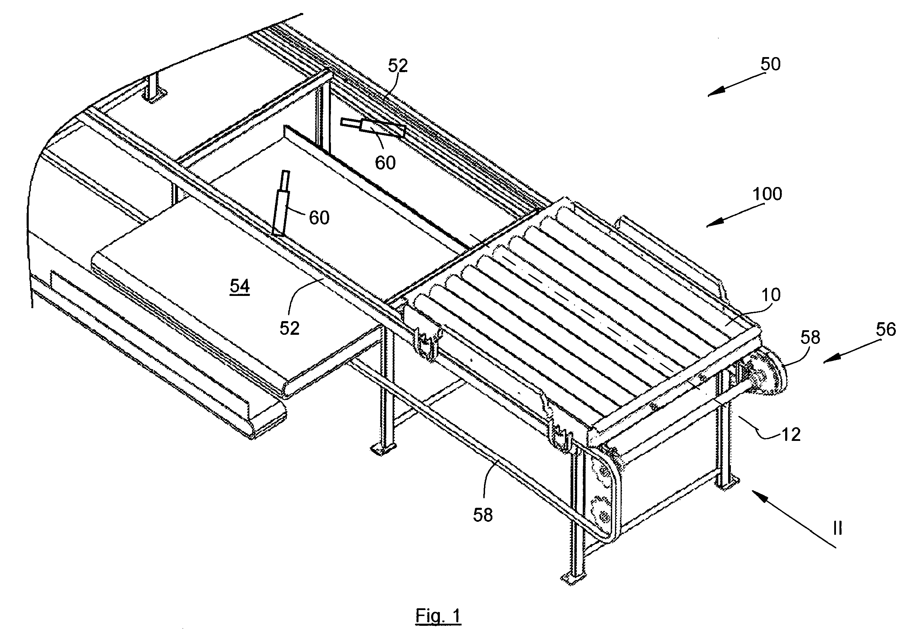

Dans la description qui suit, les termes relatifs à une position sont pris en référence à un plateau de transport qui transporte des produits alimentaires comme représenté sur la Fig. 1.

La Fig. 1 montre une installation de fabrication 50 qui comporte un système d'entraînement 56 et un moyen d'évacuation 54 qui est ici du type transporteur à bandes.

L'installation de fabrication 50 comporte également au moins un plateau de transport 100 entraîné en déplacement par le système d'entraînement 56.

Dans le mode de réalisation de l'invention présenté ici, le système d'entraînement 56 présente un châssis présentant deux montants 52, deux chaînes sans fin 58, chacune reposant sur un montant 52 et étant entraînée en translation par un moteur d'entraînement.

Le plateau de transport 100 est posé sur les deux chaînes 58 et est entraîné en translation par celles-ci.

Le plateau de transport 100 est chargé de produits alimentaires 10.

Dans le mode de réalisation de l'invention présenté ici, chaque produit alimentaire est comme par exemple pour des barres de jambon de forme cylindrique et l'axe 12 est parallèle aux montants 52.

L'installation de fabrication 50 comporte un poste de travail amont disposé en amont des montants 52 et un poste de travail aval disposé en aval du moyen d'évacuation 54.

Le plateau de transport 100 est prévu pour décharger les produits alimentaires 10 provenant du poste amont sur le moyen d'évacuation 54 afin qu'ils soient transportés jusqu'au poste aval.

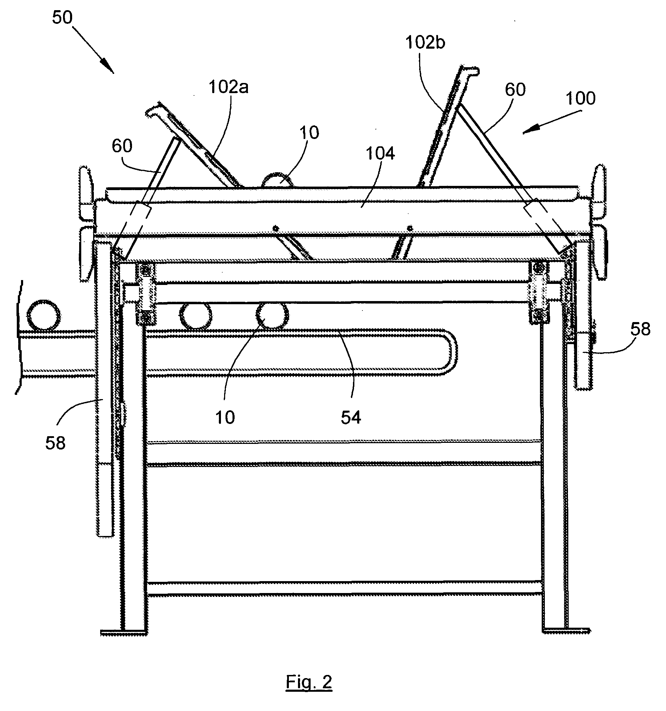

La Fig. 2 montre le plateau de transport 100 qui présente un cadre 104 qui repose sur les chaînes 58 et est entraîné en déplacement par elles.

Sur la Fig. 2, le plateau de transport 100 est dans une position de déchargement et les produits alimentaires 10 sont transférés du plateau de transport 100 vers le moyen d'évacuation 54. Les montants 52 se positionnent au-dessus du moyen d'évacuation 54 à une hauteur permettant le passage des produits alimentaires 10 sous les montants 52.

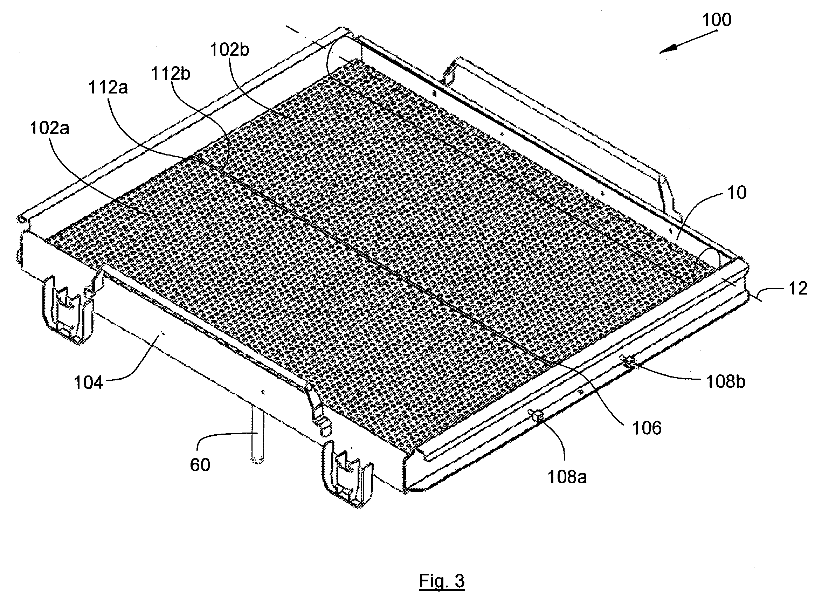

La Fig. 3 montre le plateau de transport en position de transport.

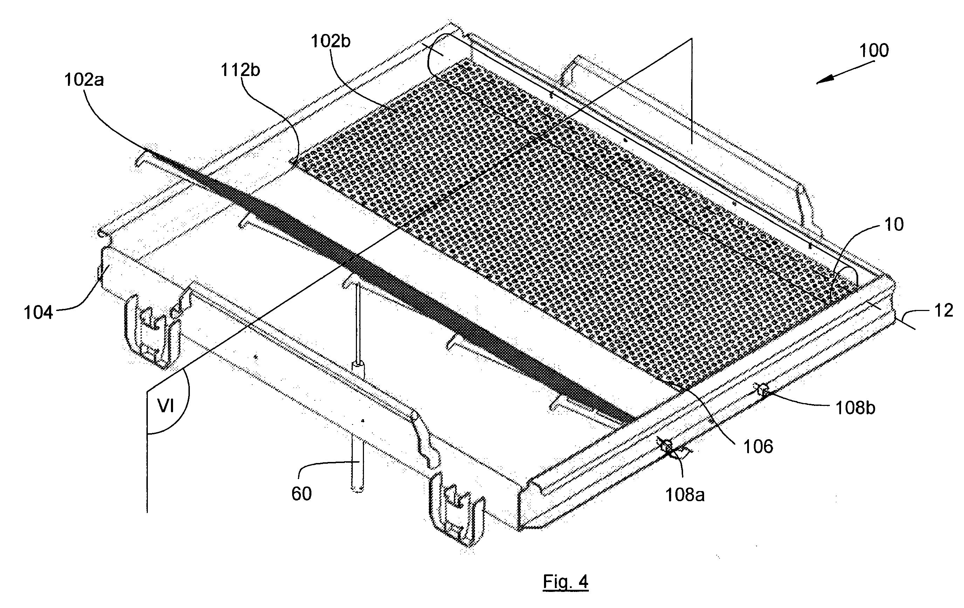

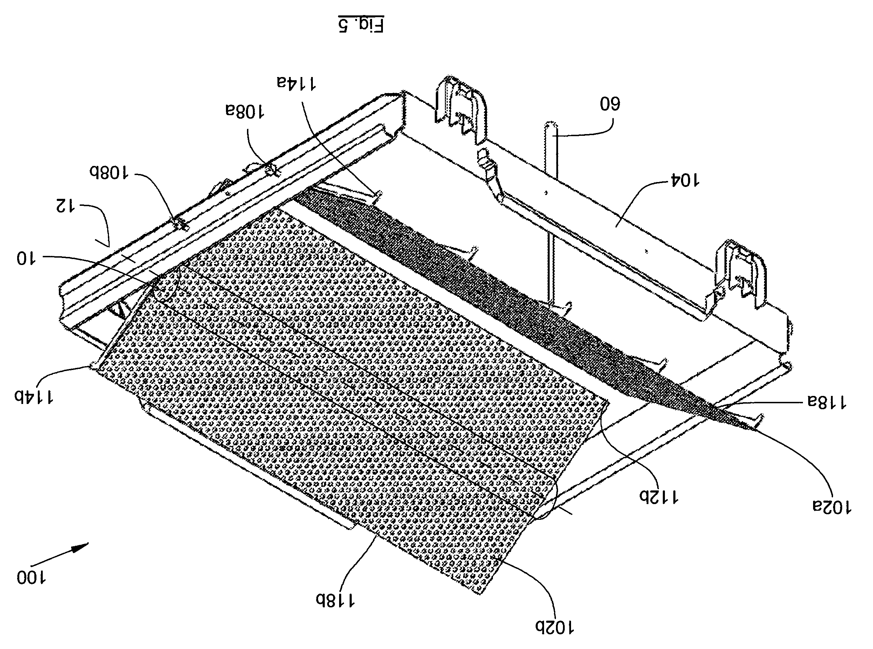

La Fig. 4 montre le plateau de transport 100 dans une première position de déchargement et la Fig. 5 montre le plateau de transport 100 dans une deuxième position de déchargement.

Le plateau de transport 100 comporte un fond 102a, 102b et le cadre 104 s'étend autour du fond 102a, 102b sur une hauteur suffisante pour empêcher les produits alimentaires 10 de rouler et de tomber de manière inopportune du plateau de transport 100. Le cadre 104 forme le châssis du plateau de transport 100 et la zone d'appui pour reposer sur les chaînes 58. Le cadre 104 et le plateau de transport 100 sont ainsi destinés à se déplacer sur les montants 52.

Le fond est divisé en deux panneaux 102a et 102b qui, en position de transport, sont disposés en continuité l'un de l'autre et qui présentent chacun un premier bord 112a, 112b qui est en vis-à-vis du premier bord 112b, 112a de l'autre panneau 102b, 102a, et qui s'étend le long d'une ligne de séparation 106 parallèle à l'axe 12 des produits alimentaires 10.

Chaque panneau 102a, 102b est monté, sur le cadre 104, mobile en rotation autour d'un axe de rotation 108a, 108b parallèle à l'axe 12 des produits alimentaires 10 entre la position de transport (Fig. 3) et la position de déchargement (Fig. 4 et Fig. 5). Les axes de rotation 108a et 108b sont sensiblement horizontaux et parallèles entre eux.

L'axe de rotation 108a, 108b est disposé de manière à ce que le centre de gravité du panneau 102a, 102b correspondant soit situé de l'autre côté dudit axe de rotation 108a, 108b par rapport à son premier bord 112a, 112b ce qui assure un retour en position de transport lorsqu'aucune charge n'est présente sur les panneaux 102a et 102b.

Dans la position de transport, chaque panneau 102a, 102b est horizontal de manière à ce que les produits alimentaires 10 restent sur lui.

Dans la position de déchargement, l'un ou les deux panneaux 102a, 102b sont pivotés de manière à ce que leur premier bord 112a, 112b s'abaisse et donc, dans le mode de réalisation préféré, que son centre de gravité se soulève.

Dans la position de transport, la distance entre les premiers bords 112a et 112b est inférieure au diamètre des produits alimentaires 10 et dans la position de déchargement, la distance entre les premiers bords 112a et 112b est supérieure au diamètre des produits alimentaires 10.

Chaque panneau 102a, 102b est mobile indépendamment de l'autre panneau 102b, 102a.

Pour maintenir le panneau 102a, 102b en position de transport et empêcher un relèvement du premier bord 112a, 112b au-delà de la position de transport, le plateau de transport 100 comporte des moyens de limitation 114a, 114b, 116a et 116b.

Chaque panneau 102a, 102b peut donc effectuer une rotation qui tend à abaisser son premier bord 112a, 112b depuis la position de transport jusqu'à la position de déchargement et une rotation qui tend à relever son premier bord 112a, 112b depuis la position de déchargement jusqu'à la position de transport.

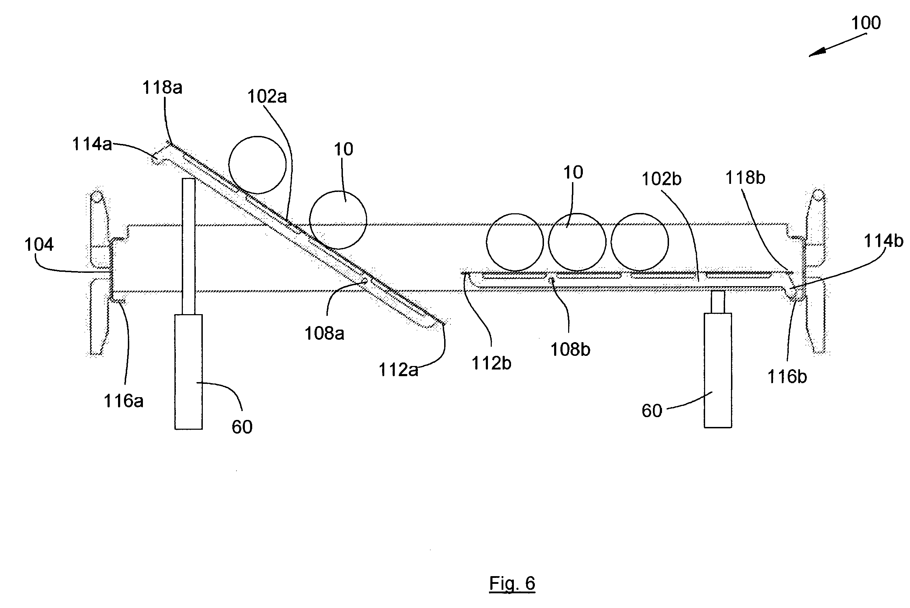

Dans le mode de réalisation de l'invention présenté sur la Fig. 6 qui est une coupe du plateau de transport 100 de la Fig. 4, les moyens de limitation sont constitués d'une butée 114a, 114b que présente chaque panneau 102a, 102b et, pour chaque butée 114a, 114b, d'un appui 116a, 116b que présente le cadre 104 et sur lequel ladite butée 114a, 114b vient en appui en position de transport.

Dans le mode de réalisation de l'invention, présenté sur la Fig. 6, la butée 114a, 114b est disposée le long d'un deuxième bord 118a, 118b du panneau 102a, 102b qui s'étend parallèlement au premier bord 112a, 112b, mais il est possible de disposer la butée sur les bords perpendiculaires au premier bord 112a, 112b.

De la même manière, selon la position de la butée 114a, 114b par rapport à l'axe de rotation 108a, 108b, l'appui 116a, 116b se placera au-dessus ou au-dessous de la butée 114a, 114b.

Lorsque les plateaux 102a et 102b sont chargés, ils restent en position horizontale ce qui évite le déchargement des produits alimentaires 10.

Lorsqu'un (Fig. 4) ou les deux (Fig. 5) plateaux 102a et 102b sont placés en position de déchargement, les premiers bords 112a et 112b s'abaissent et s'écartent l'un de l'autre pour laisser passer les produits alimentaires 10 qui, par gravité, roulent ou glissent sur le plateau 102a, 102b correspondant et tombent sur le moyen d'évacuation 54.

La mise en place de deux plateaux 102a et 102b permet de déplacer la position de chute des produits alimentaires 10 vers le centre du plateau de transport 100 sensiblement au voisinage de la ligne de contact 106.

Pour éviter la chute d'un produit alimentaire 10 sur les montants 52, chaque plateau 102a, 102b est conformé pour transporter au moins un produit alimentaire 10, et de préférence plus de deux. En effet, plus un plateau 102a, 102b peut transporter de produits alimentaires 10, plus la position de la chute s'éloigne du montant 52 situé du côté dudit plateau 102a, 102b.

De manière préférentielle, la ligne de contact 106 se situe au milieu du plateau de transport 100, c'est-à-dire que les dimensions des plateaux 102a et 102b perpendiculairement à la ligne de contact 106 sont égales.

En effet, dans le cas d'un seul plateau rotatif constituant le fond, l'ouverture du fond qui permet la chute des produits alimentaires s'effectue à partir du premier bord qui se situe au-dessus d'un montant. Les produits alimentaires tombent alors sur le montant ce qui peut les abîmer.

Pour réaliser le pivotement des plateaux 102a et 102b, l'installation de fabrication 50 comporte également pour chaque plateau 102a, 102b, un actionneur 60 qui est destiné à faire pivoter ledit plateau 102a, 102b de la position de transport à la position de déchargement au-dessus du moyen d'évacuation 54.

Dans un mode de réalisation particulier de l'invention, chaque actionneur 60 prend la forme d'un vérin qui est fixé au châssis de l'installation de fabrication 50 et qui agit sur le panneau 102a, 102b au voisinage de son deuxième bord 118a, 118b pour le soulever.

Bien entendu, la présente invention n'est pas limitée aux exemples et modes de réalisation décrits et représentés, mais elle est susceptible de nombreuses variantes accessibles à l'homme de l'art.

Dans l'invention, le moyen d'évacuation se déplace perpendiculairement aux montants, mais il est possible de prévoir que le moyen d'évacuation se déplace parallèlement.

De la même manière, l'invention a été plus particulièrement décrite dans le cas de produits alimentaires de forme cylindrique mais elle peut être utilisée pour des produits alimentaires ayant une forme différente tant que cette forme permet le glissement du produit alimentaire sur les panneaux constituant le fond lorsqu'ils sont en position de déchargement. Le diamètre du produit alimentaire est alors la dimension dans le plan perpendiculaire à la direction des premiers bords.

Dans l'invention présentée ici, le plateau de transport peut être par exemple un moule qui est utilisé au cours de la préparation du produit alimentaire comme par exemple au cours d'une phase de cuisson à l'eau ou à la vapeur, au cours d'une phase de passage dans un élément gazeux, du type fumage.

Il est également possible de mettre en oeuvre cette invention dans le cadre d'une préparation de pièces entières de jambon.

Chaque plateau de transport peut ou non comprendre un piètement, qui peut être alors parallèle ou perpendiculaire à la direction longitudinale définie par la direction des premiers bords.

## Revendications

1. Plateau de transport (100) destiné à être utilisé dans une installation de fabrication (50) de produits (10), ladite installation de fabrication (50) comportant des actionneurs (60), le plateau de transport (100) comportant:
- un châssis (104),
- un fond (102a, 102b) autour duquel s'étend ledit châssis (104), ledit fond étant constitué de deux panneaux (102a, 102b) montés sur le châssis (104), chacun présentant un premier bord (112a, 112b) parallèle et en vis-à-vis du premier bord (112b, 112a) de l'autre panneau (102b, 102a), chaque panneau (102a, 102b) étant mobile en rotation autour d'un axe de rotation (108a, 108b) parallèle auxdits premiers bords (112a, 112b) entre une position de transport (Fig. 3) dans laquelle la distance entre les premiers bords (1 12a, 112b) est inférieure au diamètre des produits (10) et une position de déchargement (Fig.4, Fig. 5) dans laquelle au moins l'un des premiers bords (112a, 112b) est abaissé pour que la distance entre les premiers bords (112a, 112b) soit supérieure au diamètre des produits (10), chaque panneau (102a, 102b) étant destiné à coopérer avec un actionneur (60) destiné à le faire passer de la position de transport à la position de déchargement, et
- des moyens de limitation (114a, 114b, 116a, 116b) destinés à empêcher un relèvement du premier bord (112a, 112b) de chaque panneau (102a, 102b) au-delà de la position de transport,
le plateau de transport (100) étant **caractérisé en ce que** l'installation de fabrication (50) de produits (10) est une installation de fabrication (50) de produits (10) alimentaires, et **en ce que** le centre de gravité de chaque panneau (102a, 102b) est disposé de l'autre côté dudit axe de rotation (108a, 108b) par rapport au premier bord (112a, 112b) dudit panneau (102a, 102b).

2. Plateau de transport (100) selon la revendication 1, **caractérisé en ce que** les moyens de limitation sont constitués d'une butée (114a, 114b) que présente chaque panneau (102a, 102b) et, pour chaque butée (114a, 114b), d'un appui (116a, 116b) que présente le châssis (104) et sur lequel ladite butée (114a, 114b) vient en appui en position de transport.

3. Plateau de transport (100) selon la revendication 2, **caractérisé en ce que**, pour chaque panneau (102a, 102b), la butée (114a, 114b) est disposée le long d'un deuxième bord (118a, 118b) dudit panneau (1 02a, 102b) qui s'étend parallèlement au premier bord (112a, 112b).

4. Installation (50) de fabrication de produits alimentaires (10) comportant:
- un système d'entraînement (56),
- un moyen d'évacuation (54),
- au moins un plateau de transport (100) selon l'une des revendications précédentes dont le châssis (104) est déplacé par ledit système d'entraînement (56), et
- pour chaque panneau (102a, 102b), au moins un actionneur (60) destiné à faire pivoter ledit panneau (102a, 102b) de sa position de transport à sa position de déchargement au-dessus du moyen d'évacuation (54).

5. Installation (50) selon la revendication 4, **caractérisée en ce que** le moyen d'évacuation (54) est constitué d'un transporteur, du type transporteur à bandes.

## Patentansprüche

1. Transportplatte (100), die dazu bestimmt ist, in einer Anlage zur Herstellung (50) von Produkten (10) eingesetzt zu werden, wobei die Herstellungsanlage (50) Betätigungselemente (60) hat und wobei die Transportplatte (100) folgendes umfasst:
- ein Gestell (104),
- einen Boden (102a, 102b), um den sich das Gestell (104) erstreckt, wobei der Boden aus zwei Platten (102a, 102b) besteht, die auf dem Gestell (104) montiert sind, wobei jede einen ersten Rand (112a, 112b) parallel zu und gegenüber dem ersten Rand (112b, 112a) der anderen Platte (102b, 102a) aufweist, wobei jede Platte (102a, 102b) drehbeweglich um eine Drehachse (108a, 108b) parallel zu den ersten Rändern (112a, 112b) zwischen einer Transportposition (Figur 3), in der der Abstand zwischen den ersten Rändern (112a, 112b) kleiner als der Durchmesser der Produkte (10) ist, und einer Entladeposition (Figur 4, Figur 5), in der mindestens einer der ersten Ränder (112a, 112b) abgesenkt ist, damit der Abstand zwischen den ersten Rändern (112a, 112b) größer als der Durchmesser der Produkte (10) ist, montiert ist, wobei jede Platte (102a, 102b) dazu bestimmt ist, mit einem Betätigungselement (60) zusammenzuwirken, das dazu bestimmt ist, sie von der Transportposition zu der Entladeposition zu überführen, und
- Begrenzungsmittel (114a, 114b, 116a, 116b), die dazu bestimmt sind, ein Anheben des ersten Randes (112a, 112b) jeder Platte (102a, 102b) über die Transportposition hinaus zu verhindern,
wobei die Transportplatte (100) **dadurch gekennzeichnet ist, dass** die Anlage (50) zur Herstellung von Produkten (10) eine Anlage zur Herstellung (50) von Lebenssmitteln (10) ist, und dass der Schwerpunkt jeder Platte (102a, 102b) auf der anderen Seite der Drehachse (108a, 108b) in Bezug zum ersten Rand (112a, 112b) der Platte (102a, 102b) angeordnet ist.

2. Transportplatte (100) nach Anspruch 1, **dadurch gekennzeichnet, dass** die Begrenzungsmittel von einem Anschlag (114a, 114b), den jede Platte (102a, 102b) aufweist, und von einer Auflage (116a, 116b) für jeden Anschlag (114a, 114b) gebildet werden, wobei die Auflage (116a, 116b) das Gestell (104) aufweist und auf der der Anschlag (114a, 114b) in Transportposition zur Auflage gelangt.

3. Transportplatte (100) nach Anspruch 2, **dadurch gekennzeichnet, dass** für jede Platte (102a, 102b) der Anschlag (114a, 114b) entlang eines zweiten Randes (118a, 118b) der Platte (102a, 102b) angeordnet ist, der sich parallel zum ersten Rand (112a, 112b) erstreckt.

4. Anlage (50) zur Herstellung von Lebensmitteln (10), umfassend:
- ein Antriebssystem (56),
- ein Ableitungsmittel (54),
- mindestens eine Transportplatte (100) nach einem der vorhergehenden Ansprüche, deren Gestell (104) von dem Antriebssystem (56) bewegt wird, und
- für jede Platte (102a, 102b) mindestens ein Betätigungselement (60), das dazu bestimmt ist, die Platte (102a, 102b) von ihrer Transportposition in ihre Entladeposition über dem Ableitungsmittel (54) zu schwenken.

5. Anlage (50) nach Anspruch 4, **dadurch gekennzeichnet, dass** das Ableitungsmittel (54) von einem Bandförderer gebildet wird.

## Claims

1. Transport tray (100) intended to be used in an installation (50) for manufacturing products (10), said manufacturing installation (50) comprising actuators (60), the transport tray (100) comprising:
- a chassis (104),
- a bottom (102a, 102b) around which said chassis (104) extends, said bottom consisting of two panels (102a, 102b) mounted on the chassis (104), each having a first edge (112a, 112b) parallel to and facing the first edge (112b, 112a) of the other panel (102b, 102a), each panel (102a, 102b) being able to move in rotation about a rotation axis (108a, 108b) parallel to said first edges (112a, 112b) between a transport position (Fig. 3) in which the distance between the first edges (112a, 112b) is less than the diameter of the products (10) and an unloading position (Fig. 4, Fig. 5) in which at least one of the first edges (112a, 112b) is lowered so that the distance between the first edges (112a, 112b) is greater than the diameter of the products (10), each panel (102a, 102b) being intended to cooperate with an actuator (60) intended to pass it from the transport position to the unloading position, and
- limitation means (114a, 114b, 116a, 116b) intended to prevent lifting of the first edge (112a, 112b) of each panel (102a, 102b) beyond the transport position,
the transport tray (100) being **characterised in that** the installation (50) for manufacturing products (10) is an installation (50) for manufacturing food products (10), and **in that** the centre of gravity of each panel (102a, 102b) is disposed on the other side of said rotation axis (108a, 108b) in relation to the first edge (112a, 112b) of said panel (102a, 102b).

2. Transport tray (100) according to claim 1, **characterised in that** the limitation means consist of a stop (114a, 114b) that each panel (102a, 102b) has and, for each stop (114a, 114b), a support (116a, 116b) that the chassis (104) has and on which said stop (114a, 114b) comes into abutment in the transport position.

3. Transport tray (100) according to claim 2, **characterised in that**, for each panel (102a, 102b), the stop (114a, 114b) is disposed along a second edge (118a, 118b) of said panel (102a, 102b) that extends parallel to the first edge (112a, 112b).

4. Installation (50) for manufacturing food products (10), comprising:
- a drive system (56),
- a discharge means (54),
- at least one transport tray (100) according to any one of the preceding claims, the chassis (104) of which is moved by said drive system (56), and
- for each panel (1 02a, 102b), at least one actuator (60) intended to pivot said panel (102a, 102b) from its transport position to its unloading position above the discharge means (54).

5. Installation (50) according to claim 4, **characterised in that** the discharge means (54) consists of a conveyor, of the belt conveyor type.
